# EUROPÄISCHE PATENTSCHRIFT

(11) **EP 0 904 913 B1**
(45) Veröffentlichungstag und Bekanntmachung des Hinweises auf die Patenterteilung: **08.05.2002**
(21) Anmeldenummer: 98117732.2
(22) Anmeldetag: 18.09.1998
(51) Int. Cl.: B29C 43/24, B29C 47/32

(54) **Verfahren zum Erreichen einer stabilen Regelung des Wulstprofils bei der Extrusion von Platten und Folien aus thermoplastischem Kunststoff**
Method for achieving a stable control of the bank profile in the extrusion of plastic films and sheets
Procédé pour atteindre une régulation stable d'entassement de matière au cours d'extrusion de feuilles ou de plaques en matière plastique

(30) Priorität: 27.09.1997 DE 19742755
(43) Veröffentlichungstag der Anmeldung: 31.03.1999
(73) Patentinhaber: Röhm GmbH & Co. KG, 64293 Darmstadt (DE)
(72) Erfinder: Greb, Horst, Dr., 64289 Darmstadt (DE); Haun, Erhard, 64347 Griesheim (DE); Funk, Karl, 64347 Griesheim (DE)

(56) Entgegenhaltungen:
- EP-A- 0 429 161
- DE-U- 9 208 837
- DE-U- 9 212 406
- US-A- 5 639 404
- MAPLESTON P: "TEMPERATURE MEASUREMENT SYSTEM SHORTENS SHEET LINE ADJUSTMENT TIME" MODERN PLASTICS INTERNATIONAL, Bd. 26, Nr. 12, Dezember 1996, Seite 119 XP000692813
- PATENT ABSTRACTS OF JAPAN vol. 014, no. 563 (M-1058), 14. Dezember 1990 & JP 02 238922 A (ASAHI CHEM IND CO LTD), 21. September 1990
- "TWIN SCANNER CONTROLS CAST FILM THICKNESS" PE PLAST EUROPE, Nr. 3/04, 1. Oktober 1993, Seite 221 XP000411647

## Beschreibung

### Gebiet der Erfindung

Die Erfindung betrifft das Gebiet der Extrusionstechnik für thermoplastisch verformbare Kunststoffe, insbesondere ein Verfahren und eine Vorrichtung zur stabilen Regelung des Wulstprofils von Kunststoffbahnen für Folien oder Platten.

### Stand der Technik

Extrusionsanlagen für thermoplastische Kunststoffe sind hinreichend bekannt. Zur beidseitigen Glättung der Oberflächen von Kunststoffbahnen für Platten oder Folien werden üblicherweise Walzenglättwerke eingesetzt. Die Walzen haben dabei die Aufgabe den geschmolzenen Kunststoff zu formen und abzukühlen. Die Walzen nehmen den aus einer Breitschlitzdüse im geschmolzenen Zustand senkrecht austretenden Kunststoff in den Glättwerkspalt zwischen zwei angetriebenen Einlaufwalzen auf. Meist wird die Kunststoffbahn über eine der Einlaufwalzen abgenommen und mit Hilfe einer weiteren Walze, die wiederum an die Einlaufwalze drückt, in die Waagerechte umgelenkt. Durch das Hindurchdrücken durch den Glättwerkspalt zwischen den Einlaufwalzen erhält die Kunststoffbahn eine definierte Dicke und eine glatte Oberfläche.

Faktoren, die die Oberflächenbeschaffenheit von Kunststoffbahnen für beidseitig geglättete Platten und Folien beeinflussen, sind die Zusammensetzung des Polymers, die Temperatur und die Viskosität des Polymerschmelzestroms, die Temperatur und Oberflächenbeschaffenheit der Walzen, die Größe des Glättwerkspalts und die Walzengeschwindigkeit.

Ein gleichmäßiges Passieren des Kunststoffs durch den Glättwerkspalt ist dabei außerordentlich wichtig für eine einwandfreie Oberflächenbeschaffenheit des extrudierten Materials. Eine hohe Bedeutung zur Vermeidung von Oberflächenstörungen kommt dabei der Höhe des sogenannten Wulstes zu, der sich im Glättwerkspalt zwischen den Einlaufwalzen durch den Rückstau der Polymerschmelze ausbildet. Schwankungen durch lokale Massestromunterschiede in der die Extrusionsdüse verlassenden Polymerschmelze führen zu unterschiedlichen Schmelzebeschleunigungen an der Oberflächen der Einlaufwalzen, wodurch sich auch die Höhe des Wulstes verändert.

Die Höhe des Wulstes soll nur innerhalb möglichst kleiner Toleranzen schwanken. Ist sie zu niedrig kann die Berührung des Extrudats an der einer der Einlaufwalzen verlorengehen. Dies hat eine schlechte Extrudatoberfläche zur Folge oder kann aufgrund der stark veränderten Abkühlbedingungen zum Klebenbleiben an der anderen Einlaufwalze führen. Das sogenannte Wickeln führt dann zum Zusammenbruch des Prozesses und in der Regel zu mehrstündigem Anlagenstillstand.

Ein zu hoher Wulst führt zu Störungen der Extrudatoberfläche durch das sogenannte Wulstrollen. Dabei wird der Wulst durch die Berührung mit dem einlaufenden Extrudatstrom von oben aus schlaufenartig eingezogen und gewissermaßen eingerollt. Dies führt zu quer zur Extrudatoberfläche verlaufenden Schlierenbildungen. Im Extremfall kann der Stauwulst auch die Düsenlippe erreichen und diese verschmutzen, was wiederum zur Störung der Extrudatoberfläche führt. Die Reinigung der Düse kann nur bei Anlagenstillstand erfolgen.

Es sind mehrere Regelverfahren für die Wulsthöhe bekannt. In der Praxis gebräuchlich ist, daß über eine Dickenmessung der erkalteten Kunststoffbahn eine manuelle Nachregelung der Wulsthöhe über die Veränderung der Walzengeschwindigkeit erfolgt. Dieses Verfahren hat den Nachteil, daß der Eingriff manuell vorgenommen wird und somit subjektiven Einflüssen unterliegt. Durch die relativ späte Dickenmessung kommt es zudem zu einem vergleichsweise hohen Ausschuß bis die Einstellungen innerhalb der angestrebten Toleranz liegen. Weiterhin sind direkte Messungen der Wulsthöhe durch mechanische Fühler oder nach der Laser-Triangulationsmethode bekannt. Die mechanische Methode ist sehr ungenau, während die optische Methode den Nachteil hat, daß sie durch die im Bereich des Stauwulstes auftretenden hohen Temperaturen und der dadurch verursachten Dichtefluktuation der Luft fehlerträchtig ist.

Eine mit Hilfe eines Stellkreises arbeitende automatische Regelung ist aus DE 40 33 661 C2 bekannt. An einer der Einlaufwalzen wird kontinuierlich der Lagerdruck als Maß für die Dicke der Materialbahn gemessen und über die Walzengeschwindigkeit geregelt. Da der Lagerdruck jedoch nicht nur von der Dicke der Materialbahn sondern auch von der Viskosität und der Temperatur des Kunststoffstroms abhängig ist, ist auch diese Regelung unbefriedigend.

Aus G 92 12 406.2 ist eine Regelung des Wulstprofils über die Breite für die Extrusion von transparenten Folien mit einer Dicke unter 5 mm bekannt. Hier wird die Messung der Orientierungsdoppelbrechung der extrudierten Folie als Maß für die Wulsthöhe herangezogen und durch die Veränderung der Einstellung des Massestroms der Extrusionsdüse geregelt.

Das GR-Patent 85.1420 beschreibt eine Vorrichtung zur Steuerung der Wulstprofils über die Breite bei der Herstellung einer beidseitig geglätteten Kunststoffbahn. Das Wulstprofil wird konstant gehalten indem die Oberflächentemperatur der Bahn nach dem Austritt aus dem Walzenspalt als Information verwendet wird. Beim Abweichen von der zum konstanten Betriebszustand im kontinuierlichen Betrieb gehörenden Solltemperatur wird der Formmassenausstoß vergrößert bzw. vermindert. Das Verfahren hat den Nachteil, daß es zu ungenau ist. In EP-A 0 429 161 wird eine weitgehend übereinstimmende Vorrichtung wie im GR-Patent 85.1420 beschrieben.

G 92 08 837.6 beschreibt eine Vorrichtung zur Eliminierung des Walzenschlageinflusses auf die Dickenverteilung in einer extrudierten, oberflächengeglätteten Folie. Kennzeichnend ist, daß ein gleichmäßiges Wulstprofil an der Kalanderwalze mittels einer traversierenden Wulstmessung und/oder durch eine traversierende Foliendickenmessung erzeugt wird. Als Störgröße wird die herstellungsbedingte Unrundheit der Kalanderwalzen angeführt, die sinusförmige Dickenschwankungen in der extrudierten und geglätteten Folienbahn verursachen. Verwendet man Dickenmeßwerte, die diese sinusförmigen Dickenschwankungen nachvollziehen für eine automatische Steuerung der Extrusionsdüse, so kann dies permanente Wulsthöhenschwankungen, die ihrerseits Turbulenzen im Wulst hervorrufen, bedingen. Als Resultat kann es zu Wulstrollern, die zu optischen Unregelmäßigkeiten in der Folie führen, kommen. Durch eine traversierende Dickenmessung an der Folienbahn mit einem Meßsensor, z. B. einem kapazitiven Wegaufnehmer oder einem Interferometer, der längs der Abzugsrichtung der Folienbahn um die Hälfte des Umfangs der Kalanderwalze versetzt mißt, und durch eine Mittelwertbildung registrierter Dickenwerte in gleicher Position in Abzugsrichtung, werden die sinusförmigen Foliendickenschwankungen eliminiert. Die jeweils zweite Messung wird durch einen Impulsgeber um eine halbe Walzendrehung versetzt zur ersten Messung gestartet. Dickenschwankungen der extrudierten Folie lassen sich so innerhalb einer maximalen Abweichung von 5 % von Mittelwert halten.

In *Spang A. und Wüsternberg (1993): "On-line-Dickenmessung: Berührungslose Verfahren für folienartige Materialien" in Kunstoffe 83, 11, S. 894 - 897* sind verschiedene Dickenmeßverfahren an kalandrierten Folien beschrieben. Als Störungen werden deutlich erkennbare periodische Dickenschwankungen mit sinusförmigen Verlauf beschrieben. Die Periodenlänge entspricht dabei dem Umfang der Kalanderwalze.

### Aufgabe und Lösung

Die Aufgabe der vorliegenden Erfindung war es, die bekannten Verfahren so zu verbessern, daß sich eine stabilere Regelung des Extrusionsprozesses im Vergleich zum Stand der Technik ergibt.

Die Aufgabe wird gelöst durch ein Verfahren zur stabilen Regelung des Wulstprofils über die Breite bei der Extrusion von Bahnen aus thermoplastischen Kunststoff (2) auf einer Extrusionsanlage mit einem von zwei Einlaufwalzen (3, 4) gebildeten Glättwerkspalt und einer nach dem Glättwerkspalt vorhandenen traversierenden Meßeinrichtung (7) mittels der Veränderung von Stellgliedern an der Extrusionsanlage, in dem nacheinander mindestens zwei traversierende Messungen eines mit dem Wulstprofil korrelierenden Parameter an der thermoplastischen Kunststoffbahn durchgeführt werden,
dadurch gekennzeichnet, daß
die einzelnen Messungen synchron zur Stellung einer der Glättwerkwalzen, daß heißt bei gleicher Glättwerkwalzenstellung, durch einem an dieser Glättwerkwalze installierten Sensor gestartet werden, wobei gleiche Meßbedingungen vorliegen und die Abweichung der aus den Messungen erhaltenen Ist-Meßwerte gegenüber vorgegebenen Sollwerten zur Regelung des Wulstprofils über die Breite durch die Veränderung der Stellgliedern an der Extrusionsanlage verwendet werden.

Der Erfindung liegt die Erkenntnis zugrunde, daß praktisch jede an der extrudierten Kunststoffbahn vorgenomme traversierende Messung den periodisch auftretenden, sinusförmigen Störeinflüssen des Walzenschlags unterliegt. Obwohl der Effekt des Walzenschlags meist nur gering ist und bei einem ansonsten stabilen Extrusionsprozeß zu in der Regel tolerierbaren Schwankungen des Wulstprofils über die Breite der extrudierten Kunststoffbahn führt, stellt er im Kombination mit empfindlichen Meß- und Regeleinrichtungen ein Problem dar.

Sind die Einlaufwalzenstellung und die jeweilige Stellung einer traversierenden Meßeinrichtung nicht miteinander gekoppelt, so werden laufend, im Grunde genommen nicht vergleichbare Messungen der mit dem Wulstprofil korrelierenden Parametern erhalten, da sich die Störeinflüsse mit der Walzenstellung ändern. Es können daher scheinbare Meßwertveränderungen registriert werden, die dann entsprechende Regelvorgänge auslösen obwohl der Extrusionsprozeß an sich stabil ist. Die Folge ist eine "nervöse" Regelung, die in unerwünschter Weise zu einem Abdriften der mittleren Bahndicke führen kann.

Erfindungsgemäß lassen sich diese walzenspezifischen und/oder walzenindividuellen Einflüsse sehr gut egalisieren, wenn die Positionen, die die traversierende Meßeinrichtung durchläuft und die Einlaufwalzenposition miteinander gekoppelt werden. Die an bestimmten Walzenpositionen auftretenden Störeinflüsse durch den Walzenschalg sind dann annähernd konstant, so daß man trotz des Walzenschlags bei einem stabilen Extrusionsprozeß von stabilen Meßprofilen ausgehen kann. Weitere Störeinflüsse, wie z. B. ungewollte Veränderungen der Stellung der Stellglieder oder pulsierende Schmelzeströme, können dann als Veränderung des Meßprofils besser erkannt und umso effektiver geregelt werden.

Die Erfindung wird durch die nachstehenden Figuren erläutert, ist aber nicht auf die dargestellten Ausführungsformen beschränkt.

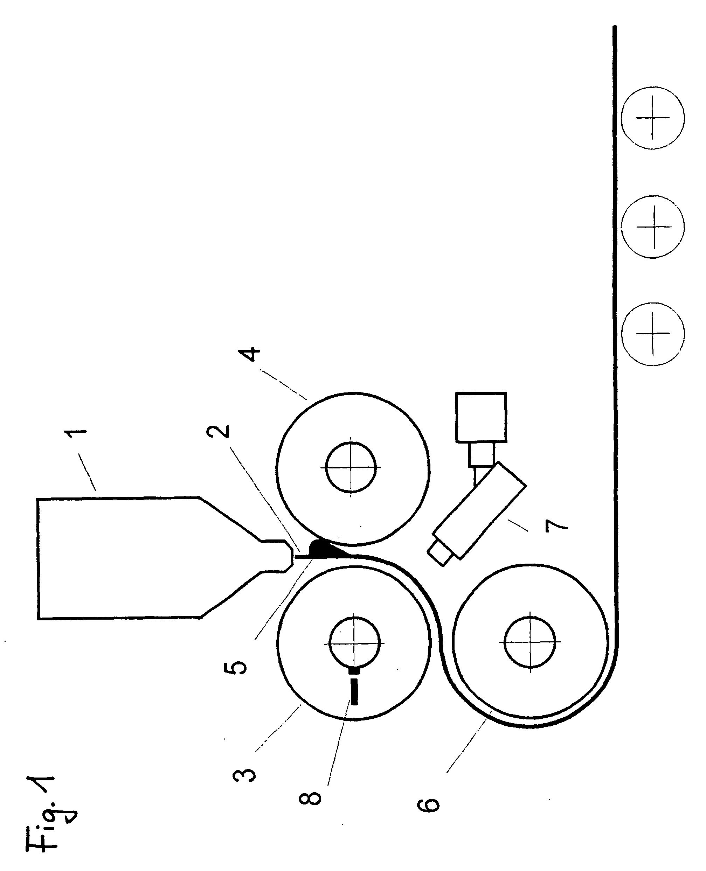

Fig. 1 zeigt eine mögliche Anordnung für eine erfindungsgemäße Vorrichtung schematisch von der Seite. Es werden die folgenden Bezugszeichen verwendet.
(1) = Breitschlitz-Extrusionsdüse
(2) = Polymerschmelze (Bahn aus thermoplastischem Kunststoff)
(3) = Einlaufwalze (3)
(4) = Einlaufwalze (4)
(5) = Wulst
(6) = Umlenkwalze
(7) = Traversierende Meßeinrichtung mit Meßsensor
(8) = Auslöse-Sensor an der Einlaufwalze (3)

### Ausführung der Erfindung

Die Erfindung geht von den an sich bekannten Vorrichtungen zur Extrusion von flachen Bahnen für Folien oder Platten aus thermoplastischem Kunststoff aus, die ein Glättwerk und eine traversierende Meßeinrichtung (7) hinter dem Glättwerkspalt aufweisen.

Für das erfindungsgemäße Verfahren sind praktisch alle traversierenden Meßeinrichtungen geeignet, die mit dem Wulstprofil korrelierende Parameter messen und sich hinter dem Glättwerkspalt befinden und somit zur Regelung des Wulstprofils über die Breite mittels der Veränderung von Stellgliedern an der Extrusionsanlage in sich bekannter Weise eingesetzt werden können.

Mit dem Wulstprofil korrelierende Parameter sind z. B. die Temperatur der Kunststoffbahn, die Dicke der Kunststoffbahn oder die Orientierungsdoppelbrechung der Kunststoffbahn. Die traversierende Meßeinrichtung (7) kann daher z. B. eine pyrometrische Meßeinrichtung sein, die das thermische Profil der extrudierten Bahn registriert, wodurch sich indirekt auf das Wulstprofil schließen läßt (siehe z. B. EP-A 0 429 161). Ebenso kann das traversierende Meßsystem zur Messung der Orientierungsdoppelbrechung ausgelegt sein (siehe z. B. DE-U 92 12 406.2). Letzteres Verfahren ist insbesondere bei der Extrusion von Folien aus Kunststoffen mit hoher intrinsischer Doppelbrechung wie z. B. Polystyrol oder Polycarbonat geeignet. Ebenso ist z. B. eine Meßeinrichtung zur Eliminierung des Walzenschalgs entsprechend DE-U 92 08 837.6 (G 92 08 837.6) geeignet. Es können auch mehrere Meßeinrichtungen gleichzeitig vorhanden sein.

Der Glättwerkspalt wird durch zwei Kalanderwalzen, die Einlaufwalzen (3, 4), gebildet, durch deren Spalt die Kunststoffschmelze (2) aus einer Breitschlitz-Extrusionsdüse (1) unter Ausbildung eines Wulstes (5) hindurchgeführt wird. Üblicherweise wird die Kunststoffbahn noch über eine oder mehrere Umlenkwalzen (6) geführt (Eine Zusammenfassung industriell gebräulicher Walzenanordungen kann z. B. Groß, H. (1997) in Kunststoffe 87, 5, Seite 564 - 568, "Wie sieht die günstigste Walzenanordnung aus" entnommen werden).

Hinter dem Glättwerkspalt ist in an sich bekannter Weise eine traversierende Meßeinrichtung (7) installiert. Diese besteht aus einem Meßsensor, z. B. einem Pyrometer oder einer Infrarotmeßsonde, und einer Präzisions-Lineareinheit, auf der der Meßsensor montiert ist. Der Meßsensor kann somit über die Breite der Kunststoffbahn, bevorzugt rechtwinklig zur Extrusionsrichtung, in geringem Abstand zur extrudierten Kunststoffbahn traversieren.

Im folgenden wird davon ausgegangen, daß der Extrusionsvorgang z. B. bei einer Folienextrusion bereits angelaufen ist und die Anlage eine Folie ausstößt, deren mittlere Dicke im erforderlichen Bereich liegt.

Es erfolgen nun mindestens zwei Messungen unter gleichen Bedingungen, d. h. vor allem bei bevorzugt konstanter Walzengeschwindigkeit und gleicher Geschwindigkeit der traversierenden Meßeinrichtung. Unter einer Messung ist dabei die Aufnahme einer Vielzahl von Einzelmeßwerten, z. B. 10 - 300 Einzelmeßwerten, an definierten Positionen über die Breite der Kunststoffbahn zu verstehen. Aus den Einzelmeßwerten (Ist-Meßwerten) setzt sich ein Istwert-Meßprofil, eine Ist-Meßwertkurve, über die Breite zusammen. Diese Ist-Meßwertkurve kann mit einer vorgegebenen Sollwertkurve verglichen werden.

Durch den auf der Einlaufwalze (4) positionierten Auslösesensor (8), z. B. ein induktiver oder ein kapazitiver Näherungssensor oder eine Lichtschränke, wird in definierter Walzenstellung, z. B. 12 Uhr, eine erste traversierende Messung (I) ausgelöst. Die Walzengeschwindigkeit ist während der Messung bevorzugt völlig konstant. Anhand der Meßdaten ergibt sich erstes Meßprofil über die Breite, das im Falle einer pyrometrischen Messung ein Temperaturprofil sein kann.

Wenn die traversierende Meßeinrichtung bzw. deren Meßsensor die Kunststoffbahn über die Breite passiert hat, wird die Messung (I) abgebrochen und der Meßsensor fährt z. B. mit erhöhter Geschwindigkeit in die Ausgangsstellung zurück. Anschließend erfolgt eine zweite Messung (II) die wiederum durch den Auslösesensor (8) bei gleicher Walzenstellung der Walze (4) ausgelöst wird unter den gleichen Bedingungen wie bei der Messung (I). Bevorzugt erfolgen in regelmäßigen Abständen weitere Messungen wiederum bei gleicher Walzenstellung und unter gleichen Bedingungen.

Die Istwert-Meßprofile werden z. B. in Form von Ausdrucken oder optischer Darstellungen auf einem Computerbildschirm dargestellt und mit vorgegebenen Sollwertkurven verglichen. Die Sollwertkurven können z. B. aus Erfahrungswerten bei manuell vorgenommenen Regelungen abgeleitet werden. Auch kann eine Sollwertkurve bzw. eine Sollwertgerade z. B. aus den Mittelwerten vieler Einzelmessungen resultieren. In der Regel wird die jeweilige Sollwertkurve spezifisch für den jeweiligen Extrusionsprozeß gewählt werden.

Die Auswertung der Ist-Meßwertkurven in Vergleich zu den Sollwertkurven und gegebenenfalls daraus resultierende Regelvorgänge können manuell oder z. B. mit Hilfe eines Rechnerprogramms im Computer erfolgen. Zeigen die Ist-Meßwertkurve und die Sollwertkurve keine oder nur geringe Abweichungen innerhalb eines vorgegeben Bereichs voneinander, so erfolgt kein Stellvorgang, da der Extrusionsprozeß insgesamt stabil ist.

Ist die Abweichung der Ist-Meßwertkurve von der vorgegebenen Sollwertkurve jedoch z. B. an einer bestimmten Stelle zu hoch, so kann in bekannter Weise ein entsprechend lokaler Eingriff der Stellglieder der Extrusionsanlage, z. B. der Dehnbolzen oder der Piezotranslatoren an der Extrusiondüse erfolgen (siehe dazu z. B. EP-A 367 022, EP-A 435 078, EP-A 418 681 und EP-A 484 841). Ebenso kann z. B. die Geschwindigkeit der Extruderschnecke oder Zahnradschmelzepumpe des Extruders über einen Regelkreis verändert werden, wodurch das Wulstprofil insgesamt beeinflußt wird. Bevorzugt erfolgt die Regelung durch die Veränderung der Stellglieder an der Extrusionsdüse. Durch die Veränderung der Stellglieder wird das Wulstprofil im Glättwerkspalt so verändert, daß wieder annähernd konstante Bedingungen auftreten. Wird die Geschwindigkeit der Einlaufwalzen verändert, so müssen anschließend wieder mindestens zwei neue Messung unter gleichen Bedingungen erfolgen; um erneut von vergleichbaren Meßbedingungen ausgehen zu können.

Eine erfindungsgemäßen Vorrichtung zur stabilen Regelung des Wulstprofils über die Breite bei der Extrusion von Bahnen aus thermoplastischen Kunststoff durch einen von zwei Einlaufwalzen (3, 4) gebildeten Glättwerkspalt mittels der Veränderung von Stellgliedern an der Extrusionsanlage gemäß dem Verfahren nach Anspruch 1, besteht aus den zwei Einlaufwalzen (3, 4) und einer sich hinter dem Glättwerkspalt befindenden traversierenden Meßeinrichtung (7), wobei eine der beiden Einlaufwalzen (3, 4) des Glättwerkspalts mit einem Auslöse-Sensor (8) ausgestattet ist, welcher die traversierende Meßeinrichtung (7) immer in der gleichen Stellung der Einlaufwalze startet.

Als Auslösesensor (8) kann z. B. ein induktiver oder ein kapazitiver Näherungssensor oder eine Lichtschranke verwendet werden.

Unter Anwendung des erfindungsgemäßen Verfahrens bzw. der erfindungsgemäßen Vorrichtung können Folien oder Platten aus thermoplastischen Kunststoffen aller Art, bevorzugt jedoch mit einer Dicke bis zu 5 mm mit hoher Gleichmäßigkeit hergestellt werden. Das erfindungsgemäße Verfahren bzw. die erfindungsgemäße Vorrichtung eignet sich dabei für praktisch alle thermoplastisch verarbeitbaren Kunststoffe, insbesondere für Polystyrol, Polyethylenterephthalat, Polybutylenterephthalat, besonders bevorzugt für Polycarbonat und für Polymethylmethacrylat.

## Patentansprüche

1. Verfahren zur stabilen Regelung des Wulstprofils über die Breite bei der Extrusion von Bahnen aus thermoplastischen Kunststoff (2) auf einer Extrusionsanlage mit einem von zwei Einlaufwalzen (3, 4) gebildeten Glättwerkspalt und einer nach dem Glättwerkspalt vorhandenen traversierenden Meßeinrichtung (7) mittels der Veränderung von Stellgliedern an der Extrusionsanlage,
in dem nacheinander mindestens zwei traversierende Messungen eines mit dem Wulstprofil korrelierenden Parameter an der thermoplastischen Kunststfoffbahn durchgeführf werden,
**dadurch gekennzeichnet, daß**
die einzelnen Messungen synchron zur Stellung einer der Glättwerkwalzen, daß heißt bei gleicher Glättwerkwalzenstellung, durch einem an dieser Glättwerkwalze installierten sensor gestartet werden, wobei gleiche Meßbedingungen vorliegen und die Abweichung der aus den Messungen erhaltenen Meßwerte gegenüber vorgegebenen Sollwerten zur Regelung des Wulstprofils über die Breite durch die Veränderung der Stellgliedern an der Extrusionsanlage verwendet werden.

2. Verfahren nach Anspruch 1, **dadurch gekennzeichnet, daß** der mit dem Wulstprofil korrelierende Parameter die Temperatur der Kunststoffbahn ist.

3. Verfahren nach Anspruch 1, **dadurch gekennzeichnet, daß** der mit dem Wulstprofil korrelierende Parameter die Dicke der Kunststoffbahn ist.

4. Verfahren nach Anspruch 1, **dadurch gekennzeichnet, daß** der mit dem Wulstprofil korrelierende Parameter die Orientierungsdoppelbrechung der Kunststoffbahn ist.

5. Vorrichtung zur stabilen Regelung des Wulstprofils über die Breite bei der Extrusion von Bahnen aus thermoplastischen Kunststoff durch einen von zwei Einlaufwalzen (3, 4) gebildeten Glättwerkspalt mittels der Veränderung von Stellgliedern an der Extrusionsanlage gemäß dem Verfahren nach Anspruch 1, bestehend aus den zwei Einlaufwalzen (3, 4) und einer sich hinter dem Glättwerkspalt befindenden traversierenden Meßeinrichtung (7),
**dadurch gekennzeichnet, daß**
eine der beiden Einlaufwalzen (3, 4) des Glättwerkspalts mit einem Auslöse-Sensor (8) ausgestattet ist, welcher die traversierende Meßeinrichtung (7) immer in der gleichen Stellung der Einlaufwalze startet.

## Claims

1. A process for stable control of the bulge profile over its width in the extrusion of ribbons of thermoplastic material (2) in an extrusion plant with a smoothing roller gap formed by two supply rollers (3, 4) and a traversing measuring apparatus (7) disposed after the smoothing roller gap by the adjustment of actuators in the extrusion plant, in which a minimum of two traversing measurements of a parameter correlating to the bulge profile are carried out one after the other on the thermoplastic ribbon, **characterised in that** the individual measurements are started synchronously with the position of one of the smoothing rollers, that is, with identical smoothing roller position by means of a sensor installed in this smoothing roller, wherein identical measurement conditions are present and the deviation from pre-determined specified values of the measured values obtained from the measurements are used to control the bulge profile over its width by alteration of the actuators in the extrusion plant.

2. A process according to claim 1, **characterised in that** the parameter which correlates to the bulge profile is the temperature of the plastic ribbon.

3. A process according to claim 1, **characterised in that** the parameter which correlates to the bulge profile is the thickness of the plastic ribbon.

4. A process according to claim 1, **characterised in that** the parameter which correlates to the bulge profile is the orientation bi-refringence of the plastic ribbon.

5. An apparatus for stable control of the bulge profile over its width in the extrusion of ribbons of thermoplastic material in an extrusion plant with a smoothing roller gap formed by two supply rollers (3, 4) by the adjustment of actuators in the extrusion plant according to the process of claim 1, comprising the two supply rollers (3, 4) and a traversing measurement apparatus (7) disposed behind the smoothing roller gap, **characterised in that** one of the two supply rollers (3, 4) of the smoothing roller gap is equipped with a triggering sensor (8) which always starts the traversing measurement apparatus (7) at the same position of the supply roller.

## Revendications

1. Procédé de régulation stable du profil de l'entassement de matière suivant la largeur pendant l'extrusion de bandes de matière thermoplastique dans une installation d'extrusion comprenant un intervalle d'un dispositif de lissage formé par deux cylindres d'entrées 3, 4 et d'une installation de mesure traversante 7, en aval de l'intervalle du dispositif de lissage, par modification des organes d'actionnement de l'installation d'extrusion,
selon lequel on effectue successivement au moins deux mesures traversantes d'un paramètre lié par corrélation au profil de l'entassement de matière de la bande de matière thermoplastique,
**caractérisé en ce que**
les différentes mesures sont démarrées en synchronisme avec la position de l'un des cylindres du dispositif de lissage c'est-à-dire pour une même position des cylindres du dispositif de lissage à l'aide d'un capteur installé sur l'un des cylindres du dispositif de lissage, dans les mêmes conditions de mesure, et
on utilise la déviation des valeurs de mesure obtenue par les mesures, par rapport à des valeurs de consigne prédéterminées, pour réguler le profil de l'entassement de matière suivant la largeur en modifiant les organes d'actionnement de l'installation d'extrusion.

2. Procédé selon revendication 1
**caractérisé en ce que**
le paramètre lié par corrélation au profil de l'entassement de matière est la température de la bande de matière plastique.

3. Procédé selon revendication 1
**caractérisé en ce que**
le paramètre lié par corrélation au profil de l'entassement de matière est l'épaisseur de la bande de matière plastique.

4. Procédé selon revendication 1.
**caractérisé en ce que**
le paramètre lié par corrélation au profil de l'entassement de matière est la double réfraction d'orientation de la bande de matière thermoplastique.

5. Dispositif de régulation stable du profil de l'entassement de matière suivant la largeur lors de l'extrusion de bandes de matière thermoplastique par un intervalle d'un dispositif de lissage formé de deux cylindres d'entrée 3, 4 par modification des organes d'actionnement de l'installation d'extrusion selon procédé de la revendication 1, comprenant les deux cylindres d'entrée 3, 4 et l'installation de mesure traversante 7, en aval de l'intervalle du dispositif de lissage,
**caractérisé en ce que**
l'un des deux cylindres d'entrée 3,4 de l'intervalle du dispositif de lissage est équipé d'un capteur de déclenchement 8 qui démarre l'installation de mesure traversante 7 toujours dans la même position du cylindre d'entrée.
